# EUROPÄISCHE PATENTSCHRIFT

(11) **EP 2 001 651 B1**
(45) Veröffentlichungstag und Bekanntmachung des Hinweises auf die Patenterteilung: **17.05.2017**
(21) Anmeldenummer: 07711119.3
(22) Anmeldetag: 10.01.2007
(51) Int. Cl.: B29C 47/68

(54) **VORRICHTUNG ZUM FILTRIEREN EINES VERFLÜSSIGTEN KUNSTSTOFFES**
DEVICE FOR FILTERING A LIQUID SYNTHETIC MATERIAL
DISPOSITIF POUR FILTRER UNE MATIÈRE PLASTIQUE LIQUÉFIÉE

(30) Priorität: 24.01.2006 DE 102006003140
(43) Veröffentlichungstag der Anmeldung: 17.12.2008
(73) Patentinhaber: Nordson Holdings S.à r.l. & Co. KG, 40699 Erkrath (DE)
(72) Erfinder: WÖSTMANN, Stefan, 48336 Sassenberg (DE)
(74) Vertreter: Eisenführ Speiser
(86) Internationale Anmeldenummer: PCT/DE2007/000021
(87) Internationale Veröffentlichungsnummer: WO 2007/085220

(56) Entgegenhaltungen:
- WO-A-2004/026432
- DE-A1- 10 254 022
- US-A1- 2004 026 339
- "ADVERTISEMENT" PLASTVERARBEITER, HUETHIG GMBH, HEIDELBERG, DE, Bd. 41, Nr. 3, 1. März 1990 (1990-03-01), Seite 132, XP000135755 ISSN: 0032-1338

## Beschreibung

Die Erfindung bezieht sich auf eine Vorrichtung zum Filtrieren eines verflüssigten Kunststoffes gemäß dem Oberbegriff des Hauptanspruches und dem Oberbegriff des selbständigen Anspruches 3.

Eine gattungsbildende Einrichtung ist in der DE 102 54 022 B4 beschrieben. Die in dieser Literaturstelle beschriebene Einrichtung geht von einem Stand der Technik, beispielsweise gemäß der EP 0 798 098 B1 aus.

Bei der bekannten Einrichtung gemäß der EP 0 798 098 B1 sind im Strömungsweg des Fluids in einem quer zur Strömungsrichtung verschieblich gelagerten Siebträger, mindestens zwei Filterelemente in entsprechenden Siebräumen angeordnet. Auf der Reinsiebseite ist ein einziger Verbindungskanal vorgesehen, so daß damit die Reinsiebseite der beiden Filterelemente hydraulisch miteinander verbunden ist.

Diese Anordnung erfordert ein langes Gehäuse und einen langen Siebträgerbolzen und damit auch einen längeren Verschiebeweg. Ein längerer Verschiebeweg wiederum erfordert eine größere hydraulische Zylinderanordnung und eine stärkere Auslegung aller Bauteile, die in Verbindung mit der hydraulischen Anordnung stehen.

Bei der gattungsbildenden Einrichtung gemäß der DE 102 54 022 B4 wird angestrebt, eine größtmögliche Sieboberfläche bei kleinstmöglichen Siebträgerdurchmessern zu erreichen. Diese der bekannten Einrichtung zugrundeliegende Aufgabe wird dadurch gelöst, daß jeder Siebraum auf der Reinsiebseite zwei im Siebträger ausgearbeitete Siebträgerteilkanäle aufweist,die vom Siebraum zum Abfuhrkanal hin gerichtet sind.

Weiterhin ist der eigentliche Abfuhrkanal auch in vier Gehäuseteilkanäle aufgeteilt. Bei dieser Einrichtung wird also sowohl die Produktionsstellung wie die Rückspülstellung realisiert und es wird erreicht, daß durch Verschieben des Siebträgers ein Siebraum so eingestellt werden kann, daß keine Verbindung des Siebraumes mit dem Zufuhrkanal und dem Rückspülkanal besteht, so daß durch diese Anordnung eine Druckerhöhung in dem so gesperrten Siebraum auftritt, wodurch das Rückspülen verbessert wird.

Es ist offensichtlich, daß diese Einrichtung zwar ihre Aufgabe erfüllt, aber aufwendig herzustellen ist.

In der WO 2004/026432 A1 wird in den Fig. 10 ff. eine Vorrichtung zum Filtrieren eines Fluids, insbesondere für Kunststoff verarbeitende Anlagen beschrieben, bei welcher der Zufuhrkanal sich in insgesamt vier Zufuhrteilkanäle aufteilt. Auch bei dieser Anordnung wird also sowohl die Produktionsstellung wie die Rückspülstellung realisiert und es wird erreicht, dass durch Verschieben des Siebträgers ein Siebraum so eingestellt werden kann, dass keine Verbindung des Siebraumes mit dem Zufuhrkanal und dem Rückspülkanal besteht, so dass durch diese Anordnung eine Druckerhöhung in dem so gesperrten Siebraum auftritt, wodurch das Rückspülen verbessert wird. Erreicht wird dieses Ziel aber durch ein relativ lang ausgebildetes Gehäuse und damit auch durch einen relativ lang ausgebildeten Siebträger, so dass auch hier ein langer Verschiebeweg in Kauf genommen werden muss, der eine grössere hydraulische Zylindereinheit und eine stärkere Auslegung aller Bauteile, die in Verbindung mit der hydraulischen Anordnung stehen, bedingt.

Der Erfindung liegt die Aufgabe zugrunde, bei Erreichen der gleichen Ziele, die auch der Einrichtung gemäß dem gattungsbildenden Stand der Technik zugrundeliegen, aber die Einrichtung weniger aufwendig herstellen zu können, d. h. sie kostengünstiger herstellen zu können, wobei alle auch im gattungsbildenden Stand der Technik erreichbaren Stellungen des Siebträgers möglich sind.

Diese der Erfindung zugrundeliegende Aufgabe wird durch den selbständigen Anspruch 1 und den Unteranspruch 2 gelöst.

Während im Voraufgehenden von einer Vorrichtung zum Filtrieren eines verflüssigten Kunststoffes ausgegangen wird, bei welchem in dem Siebträger wenigstens zwei Siebräume mit entsprechenden Filterelementen angeordnet sind, ist es z. B. aus der DE 38 40 904 C1 bekannt, eine Filtereinrichtung so auszubilden, daß in zwei Siebträgern, die jeweils in entsprechenden Bohrungen saugend dicht angeordnet sind, die Siebräume angeordnet sind, wobei diese beiden Siebräume aber mit einem Zufuhrkanal und einem Abfuhrkanal in Verbindung stehen. Um bei einer solchen Einrichtung auch eine entsprechende Rückspülung vornehmen zu können, müssen zusätzliche Spülkanäle vorgesehen sein, wodurch die an sich einfach aufgebaute Vorrichtung kostenaufwendig herzustellen ist.

Der Erfindung liegt weiterhin die Aufgabe zugrunde, ausgehend von der in der DE 38 40 904 beschriebenen gattungsbildenden Einrichtung, auch diese Einrichtung weniger aufwendig herstellen zu können, d. h. sie kostengünstiger herstellen zu können, wobei alle auch im gattungsbildenden Stand der Technik erreichbaren Stellungen des Siebträgers möglich sein sollen.

Diese der Erfindung zugrundeliegende Aufgabe wird durch die Lehre des selbständigen Anspruches 3 und des nebengeordneten Anspruches 4 gelöst.

Bei allen beiden Anordnungen ist es möglich, beide Filterelemente im Filtereinsatz zu haben, d. h. sie werden vom Kunststoff durchströmt und reinigen diesen Kunststoffstrom. Bei beiden Anordnungen ist es möglich, die Siebträger so zu verschieben, daß eines der Filterelemente von der Zufuhr des Kunststoffstromes abgetrennt ist und mit der Druckseite des anderen Siebes in Verbindung gebracht ist, wobei aber eine Öffnung zum Rückspülkanal noch nicht durchgeführt ist und schließlich ist es möglich, dieses Filterelement dann so zu verschieben, daß es mit dem Rückspülkanal in Kontakt kommt, so daß der Druck des anderen Siebes auf die Schmutzsiebseite des zu reinigenden Siebes wirkt und die Schmutzpartikelchen von der Schmutzsiebseite abfördert und in den Rückspülkanal abgibt.

Ausführungsbeispiele der Erfindung werden nachfolgend anhand der Zeichnungen erläutert. Die Zeichnungen zeigen dabei in den
- Fig. 1 - 4: eine erste Ausführungsform mit zwei Filterelementen in einem Siebbolzen, in
- Fig. 5: die Anordnung von zwei miteinander in Verbindung stehenden Siebbolzen, die je ein Filterelement aufnehmen, in
- Fig. 6: die Ausbildung der Mündung eines Zufuhrteilkanales, in
- Fig. 7: eine abgeänderte Ausführungsform der Mündung eines Zufuhrteilkanales, in
- Fig. 8: wiederum eine geänderte Ausführungsform der Mündung eines Zufuhrteilkanales und in
- Fig. 9: eine Ausführungsform mit vier Siebräumen.

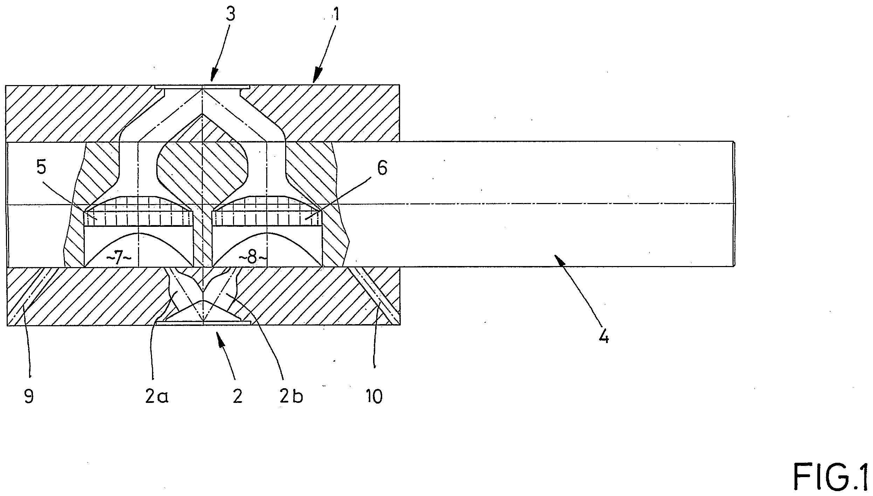

In den Fig. 1 bis 4 ist ein Gehäuse 1 dargestellt, in welchem ein Siebträger 4 verschiebbar gelagert ist. Das Gehäuse weist einen Zufuhrkanal 2 für verflüssigten Kunststoff auf, der nach Durchströmen der Filtereinrichtung das Gehäuse 1 am Abfuhrkanal 3 verläßt.

In dem Siebträger 4 sind Filterelemente 5 und 6 in entsprechenden Siebräumen 7, 8 gelagert und werden von dem vom Zufuhrkanal 2 zum Abfuhrkanal 3 strömenden Kunststoff durchströmt, und hier wird der Kunststoff von Verunreinigungen gereinigt.

Im Gehäuse sind weiterhin Rückspülkanäle 9 und 10 angeordnet.

Der Zufuhrkanal 2 teilt sich in einen Zufuhrteilkanal 2a und einen Zufuhrteilkanal 2b, wobei bei der Stellung gemäß Fig. 1 diese beiden Zufuhrteilkanäle 2a und 2b in die Siebräume 7 und 8 münden. Der Querschnitt d₁ der Mündung des Zufuhrteilkanales 2a oder 2b, mit dem dieser in den Siebraum 7 bzw. 8 mündet, ist kleiner als der Querschnitt d₂ des übrigen Bereiches des Zufuhrteilkanales 2a und 2b.

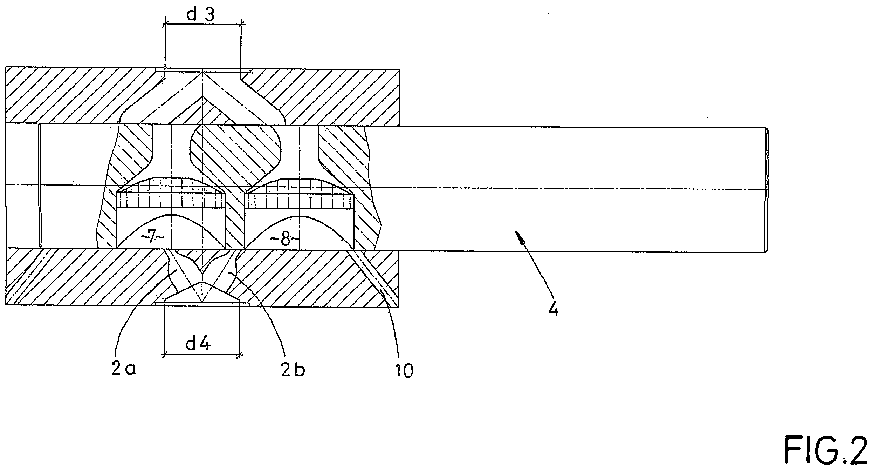

Wie dies Fig. 2 zeigt, ist der Querschnitt d₄ des Zufuhrkanales 2 mindestens so groß wie der Querschnitt d₃ des Abfuhrkanals.

Bei der Stellung gemäß Fig. 1 werden beide Siebräume mit Kunststoff beaufschlagt, der Kunststoff von den Verunreinigungen gereinigt und der gereinigte Kunststoff strömt durch den Abfuhrkanal 3 ab.

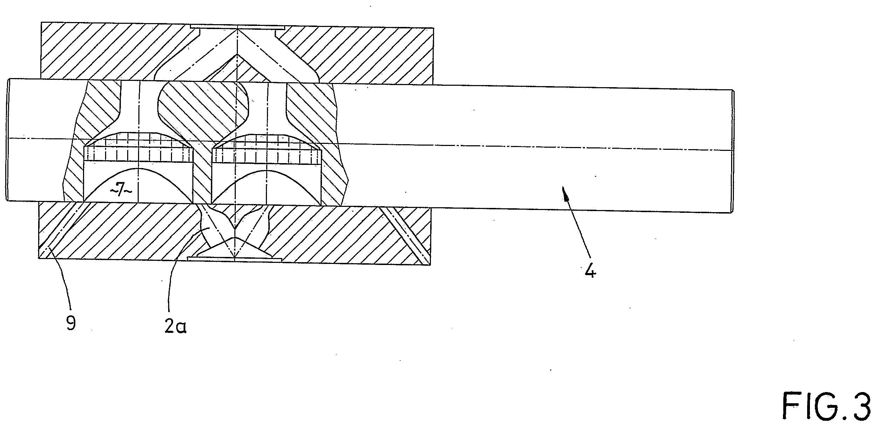

Bei der Anordnung gemäß Fig. 2 ist der Siebträger 4 so nach rechts verschoben, so daß nunmehr der Zufuhrteilkanal 2b durch den Siebträger 4 verschlossen ist, während der Zufuhrteilkanal 2a mit dem Siebraum 7, dem Sieb 5 in Verbindung steht und der Siebraum 8 nunmehr zum Rückspülkanal 10 hin offen ist. Hierdurch wird eine Unlenkung des verflüssigten Kunststoffstromes herbeigeführt, wie dies allgemein bekannt ist, so daß dadurch die an der Schmutzsiebseite des Filterelementes 6 gelagerten Feststoffpartikelchen abgeführt werden können. Bei der Anordnung gemäß Fig. 3 wird eine entsprechende Stellung nunmehr für den Siebraum 7 geschaffen, in dem der Siebträger 4 nach links verschoben ist, so daß in diesem Fall der Zufuhrteilkanal 2a verschlossen ist und der Rückspülkanal 9 zum Siebraum 7 offen ist.

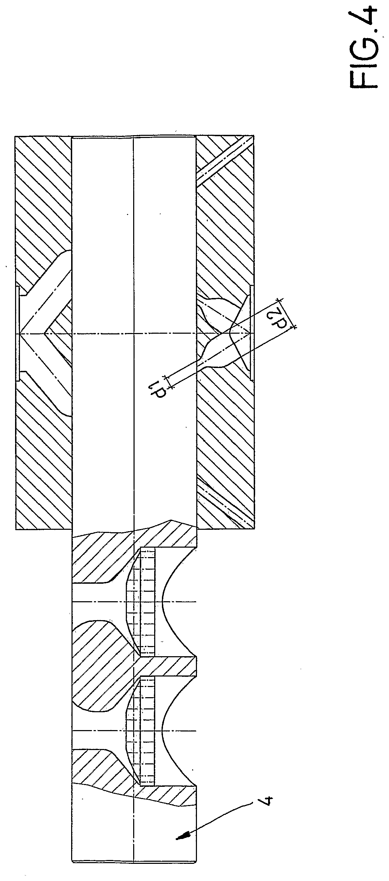

Fig. 4 zeigt die Stellung, in welcher der Siebträger ganz nach links verschoben ist, so daß beide Siebe ausgewechselt werden können.

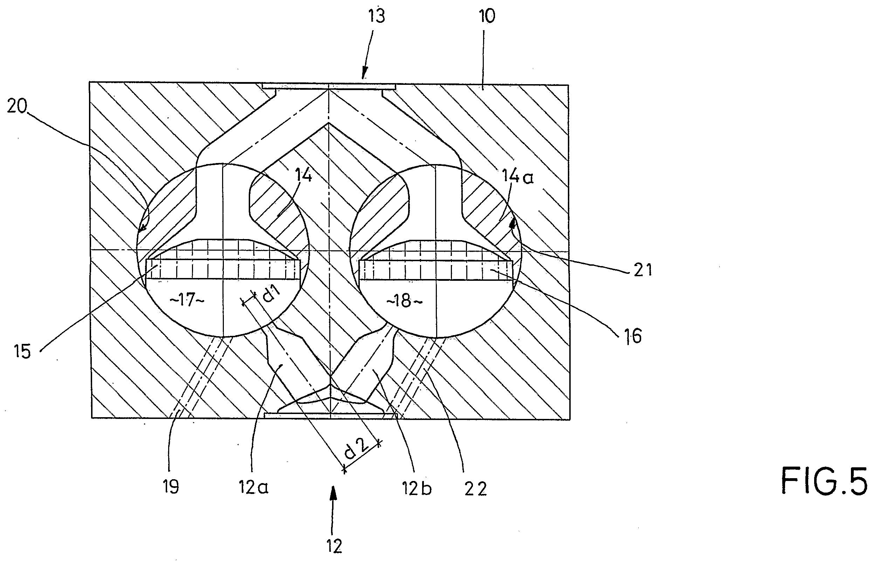

Fig. 5 zeigt eine Ausführungsform einer Vorrichtung zum Filtrieren verflüssigten Kunststoffes mit einem Gehäuse 10, einem Abfuhrkanal 13, einem Zufuhrkanal 12 und zwei Rückspülkanälen 19 und 22.

In den Siebträgeraufnahmebohrungen 20, 21 ist je ein Siebträger 14 bzw. 14a gelagert und jeder Siebträger ist mit einem Filterelement 15 bzw. 16 ausgerüstet, die in einem Siebraum 17 bzw. 18 angeordnet sind.

Auch hier ist der Zufuhrkanal 12 in zwei Zufuhrteilkanäle 12a und 12b aufgeteilt.

Auch bei dieser Anordnung ist der Mündungsquerschnitt d₁ jedes Zufuhrteilkanales 12a bzw. 12b am Eintritt in den Siebraum 17 bzw. 18 gegenüber dem normalen Querschnitt d₂ der Zufuhrteilkanäle 12a und 12b verringert.

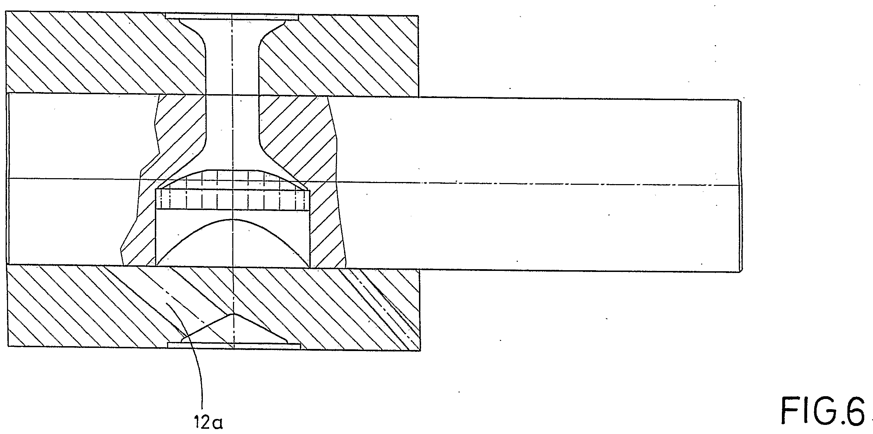

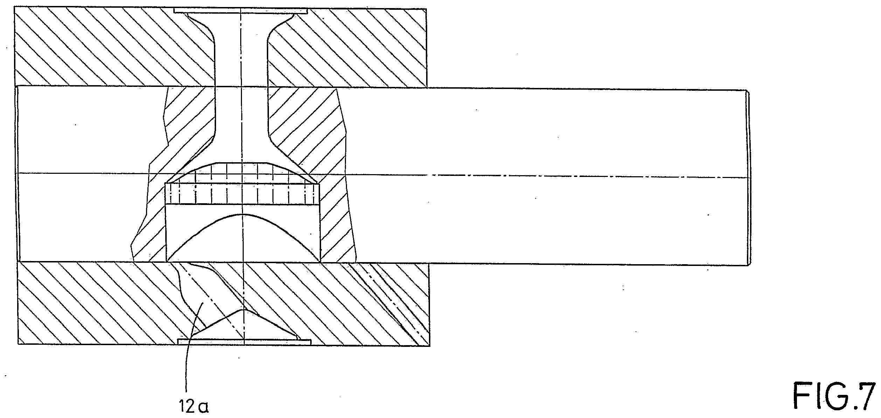

Während bei den Ausführungsformen gemäß den Fig. 1 - 5 die Mündung der Zufuhrteilkanäle, so wie auch in Fig. 7 dargestellt, flaschenhalsartig verjüngt ausgebildet ist, ist es durchaus möglich, daß - wie in Fig. 6 dargestellt - die Mündung der Zufuhrteilkanäle einfach durch entsprechende Stellung des Siebträgers 4, 14 oder 14a so verringert wird, daß die Verhältnisse d₁ und d₂ realisiert werden können.

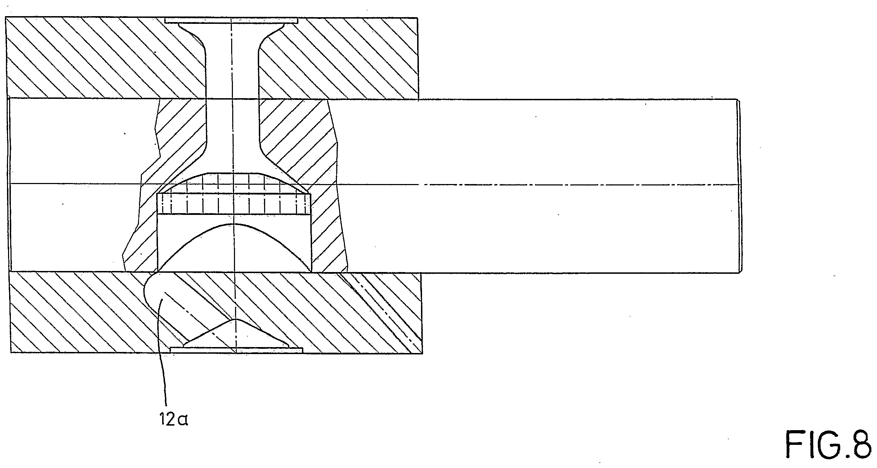

In Fig. 8 ist eine nochmals geänderte Ausführungsform dargestellt, wobei auch hier die entsprechende Querschnittsverringerung erreicht wird. Die Art der Querschnittsverringerung richtet sich im wesentlichen nach der Viskosität des Kunststoffes.

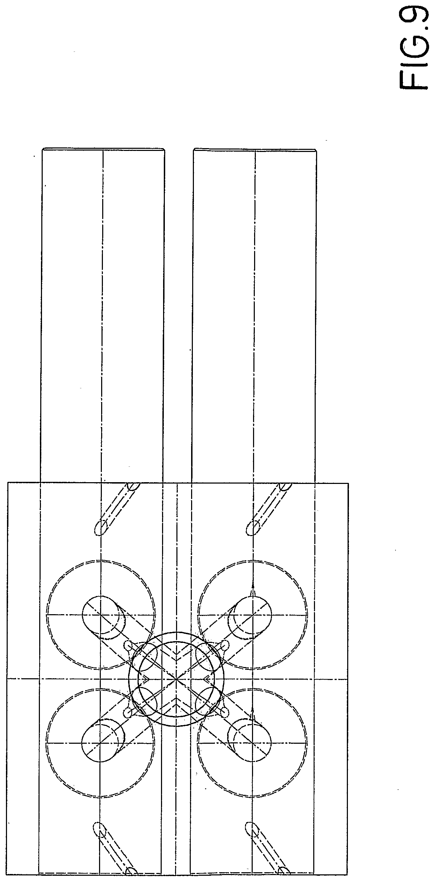

Schließlich zeigt Fig. 9 eine Ausführungsform entsprechend der Darstellung in Fig. 1, bei welcher aber insgesamt vier Siebräume geschaffen werden, so daß also auf einfachste Weise eine wesentlich erhöhte Leistung (Filterfläche) erzielbar ist

## Patentansprüche

1. Vorrichtung zum Filtrieren eines verflüssigten Kunststoffes mit einem Gehäuse (1), einem Zufuhrkanal (2), einem Abfuhrkanal (3) und Rückspülkanälen (9, 10), wobei im Strömungsweg der Kunststoffschmelze in wenigstens einem quer zur Strömungsrichtung verschieblich gelagerten Siebträger (4) zwei Filterelemente (5, 6) in je einem entsprechenden Siebraum (7, 8) angeordnet und mit dem Zufuhrkanal (2) und dem Abfuhrkanal (3) in Verbindung bringbar sind, wobei der Zufuhrkanal (2) in zwei sich zum Siebträger (4) hin öffnende Zufuhrteilkanäle (2a, 2b) aufgeteilt ist, **dadurch gekennzeichnet, dass** der Querschnitt (d₁) jedes Zufuhrteilkanales (2a, 2b) im Mündungsbereich zum Siebträger (4), mit dem dieser in den Siebraum (7, 8) mündet, verringert ist gegenüber dem Querschnitt (d₂) des übrigen Bereiches des Zufuhrteilkanales (2a, 2b).

2. Vorrichtung nach Anspruch 1 , **dadurch gekennzeichnet, dass** der Abfuhrkanal (3) im Querschnitt (d₃) mindestens gleich dem Querschnitt (d₄) des Zufuhrkanales (2) im nicht eingeschnürten Bereich entspricht.

3. Vorrichtung zum Filtrieren eines verflüssigten Kunststoffes mit einem Gehäuse (10), einem Zufuhrkanal (12), einem Abfuhrkanal (13) und Rückspülkanälen (19, 22), wobei im Strömungsweg der Kunststoffschmelze in zwei Siebträgeraufnahmebohrungen (20, 21) je ein Siebträger (14, 14a) mit je einem Filterelement (15, 16) in je einem Siebraum (17, 18) angeordnet und mit dem Zufuhrkanal (12) und dem Abfuhrkanal (13) in Verbindung bringbar ist, wobei der Zufuhrkanal (12) in zwei sich zu den Siebträgern (14, 14a) hin öffnende Zufuhrteilkanäle (12a, 12b) aufgeteilt ist, **dadurch gekennzeichnet, dass** der Mündungsquerschnitt (d₁) der Zufuhrteilkanäle (12a, 12b) am Eintritt in den Siebraum (17, 18) zum Siebträger (14, 14a) verringert ist gegenüber dem Querschnitt (d₂) der Zufuhrteilkanäle (12a, 12b.

4. Vorrichtung nach Anspruch 3, **dadurch gekennzeichnet, dass** die dem Rückspülkanal (z. B. 22) abgewandte äußere Kante der Mündung des Zufuhrteilkanales (z. B. 12b) an der äußersten Kante des Siebraumes (z. B. 18) mündet und dann der Rückspülkanal (z. B. 22) durch den Siebträger (14a) verschlossen ist.

## Claims

1. A device for filtering a molten plastic, said device comprising:
a housing (1), a feed channel (2), a discharge channel (3) and backflow channels (9,10); wherein into a flow path of said molten plastic within a filter slide (4) slidably arranged in a direction transverse to the flow path, two filter elements are arranged into a respective filter chamber (7, 8) and being connectable with the feed channel (2) and the discharge channel (3), wherein said feed channel subdivides into split-feed channels (2a, 2b), each split-feed channel opens towards the filter slide (4);
**characterized in that**, the cross section (d₁) of each split-feed channel (2a, 2b) in the mouth region to the filter slide (4), with which the filter slide flows into the filter chamber (7, 8), is reduced compared to the cross section (d₂) of the remaining portion of the split-feed channel (2a, 2b).

2. The device according to claim 1; wherein said discharge channel (3) has a cross section (d₃) and the feed channel (2) has a cross section (d₄), said cross section (d₃) being at least equal to said cross section (d₄) within the not constricted portion.

3. A device for filtering a molten plastic, said device comprising:
a housing (10), a feed channel (12), a discharge channel (13) and backflow channels (19, 22); wherein into a flow path of said molten plastic within two filter slide receiving bores (20, 21) each filter slide (4) with one filter element (15, 16) is arranged into a respective filter chamber (17, 18) and being connectable with the feed channel (12) and the discharge channel (13), wherein said feed channel subdivides into split-feed channels (12a, 12b), each split-feed channel opens towards the filter slide (14);
**characterized in that**, the cross section (d₁) of the mouth region at the entry into the filter chamber (17, 18) to the filter slide (14, 14a) is reduced compared to the cross section (d₂) of the remaining portion of the split-feed channel (12a, 12b).

4. The device according to claim 3; wherein an outer edge being of the mouth of the split-feed channel (e.g. 12b) facing away from the backflow channels (e.g. 22) opens an at an outermost edge of said filter chamber (e.g. 18) and then said backflow channels (e.g. 22) is closed by the filter slide (14a).

## Revendications

1. Dispositif de filtration d'une matière plastique liquéfiée avec un boîtier (1), un canal d'alimentation (2), un canal d'évacuation (3) et des canaux de rétrorinçage (9, 10), dans lequel, dans la voie d'écoulement de la fonte de matière plastique dans au moins un support de tamis (4) logé de manière mobile transversalement au sens d'écoulement, deux éléments de filtre (5, 6) sont disposés chacun dans un espace de tamis correspondant (7, 8) et peuvent être amenés en liaison avec le canal d'alimentation (2) et le canal d'évacuation (3), dans lequel le canal d'alimentation (2) est divisé en deux canaux partiels d'alimentation (2a, 2b) s'ouvrant vers le support de tamis (4), **caractérisé en ce que** la section transversale (d₁) de chaque canal partiel d'alimentation (2a, 2b) est diminuée dans la zone d'embouchure vers le support de tamis (4), avec laquelle celui-ci débouche dans l'espace de tamis (7, 8), par rapport à la section transversale (d₂) de la zone restante du canal partiel d'alimentation (2a, 2b).

2. Dispositif selon la revendication 1, **caractérisé en ce que** le canal d'évacuation (3) dans la section transversale (d₃) correspond au moins de manière égale à la section transversale (d₄) du canal d'alimentation (2) dans la zone non resserrée.

3. Dispositif de filtration d'une matière plastique liquéfiée avec un boîtier (10), un canal d'alimentation (12), un canal d'évacuation (13) et des canaux de rétrorinçage (19, 22), dans lequel, dans la voie d'écoulement de la fonte de matière plastique dans deux perçages de réception de support de tamis (20, 21), un support de tamis (14, 14a) avec un élément de filtre (15, 16) est disposé dans un espace de tamis (17, 18) et peut être amené en liaison avec le canal d'alimentation (12) et le canal d'évacuation (13), dans lequel le canal d'alimentation (12) est divisé en deux canaux partiels d'alimentation (12a, 12b) s'ouvrant vers les supports de tamis (14, 14a), **caractérisé en ce que** la section transversale d'embouchure (d₁) des canaux partiels d'alimentation (12a, 12b) est diminuée sur l'entrée dans l'espace de tamis (17, 18) vers le support de tamis (14, 14a) par rapport à la section transversale (d₂) des canaux partiels d'alimentation (12a, 12b).

4. Dispositif selon la revendication 3, **caractérisé en ce que** l'arête extérieure éloignée du canal de rétrorinçage (par exemple 22) de l'embouchure du canal partiel d'alimentation (par exemple 12b) débouche sur l'arête la plus externe de l'espace de tamis (par exemple 18) et le canal de rétrorinçage (par exemple 22) est ensuite fermé par le support de tamis (14a).
